# EUROPÄISCHE PATENTANMELDUNG

(11) **EP 0 688 667 A1**
(43) Veröffentlichungstag der Anmeldung: **27.12.1995**
(21) Anmeldenummer: 95108459.9
(22) Anmeldetag: 02.06.1995
(51) Int. Cl.: B32B 31/00, B32B 27/30

(54) **Mehrschichtfolie**

(30) Priorität: 23.06.1994 DE 4421675
(71) Anmelder: 4P Folie Forchheim GmbH, D-91301 Forchheim (DE)
(72) Erfinder: Osberghaus, Stefan, D-91301 Forchheim (DE); Neudecker, Alfred, D-91301 Forchheim (DE)
(74) Vertreter: Hutzelmann, Gerhard

(57) **Zusammenfassung**

Mehrschichtfolie, mit wenigstens je einer äußeren Folienlage aus Polypropylen und wenigstens einer inneren Folienlage aus Ethylen-Vinylalkohol-Copolymerisat. Erfindungsgemäß ist die Mehrschichtfolie simultan biaxial gereckt.
Dabei liegt das Flächenreckverhältnis zwischen 49 und 64 zu 1.

## Beschreibung

Die Erfindung bezieht sich auf eine Mehrschichtfolie, mit wenigstens je einer äußeren Folienlage aus Polypropylen und wenigstens einer inneren Folienlage aus Ethylen-Vinylalkohol-Copolymerisat.

Derartige Folien weisen verhältnismäßig gute Barriereeigenschaften auf.

Aufgabe der Erfindung ist es, diese guten Barriereeigenschaften noch weiter zu verbessern.

Diese Aufgabe wird erfindungsgemäß dadurch gelöst, daß die Mehrschichtfolie simultan biaxial gereckt ist.

Überraschenderweise wurde festgestellt, daß selbst bei einem sehr geringen Ethylenanteil im Ethylen-Vinylalkohol-Copolymerisat eine einwandfreie simultane, biaxiale Reckung der Mehrschichtfolie möglich ist. Durch diesen geringen Ethylenanteil wird andererseits die Barriereeigenschaft der gereckten Mehrschichtfolie deutlich verbessert.

Bei einer Mehrschichtfolie mit äußeren Folienlagen aus Polypropylen ist es besonders vorteilhaft, wenn erfindungsgemäß das Reckverhältnis längs und quer etwa 7 bis 8 zu 1 beträgt.

Mit einem derart hohen Reckverhältnis in beiden Richtungen werden optimale Werte für die Barriere-Eigenschaften erzielt.

Erfindungsgemäß liegt dabei das Flächenreckverhältnis vorzugsweise zwischen 1 zu 49 und 1 zu 64.

Eine weitere vorteilhafte Ausgestaltung der Erfindung liegt darin, daß mehrere Folienlagen aus PP und/oder mehrere innere Lagen aus EVOH übereinanderliegend vorgesehen sind.

Damit können die Barriereeigenschaften der Mehrschichtfolie noch weiter verbessert werden.

Bei einem Versuch wurde eine Mehrschichtfolie hergestellt, mit folgendem Aufbau:

| | |
|---|---|
| Polypropylen | 520 µm |
| Haftvermittler | 20 µm |
| EVOH | 70 µm |
| Haftvermittler | 20 µm |
| Polypropylen | 520 µm |
| Gesamtstärke | 1150 µm |

Diese Folie wurde dann im thermoelastischen Temperaturbereich simultan biaxial gereckt, wobei längs und quer jeweils etwa 7 bis 8 zu 1 gereckt wurde.

Die erhaltene Endfolie hatte eine Stärke von 20 µm, so daß eine Flächenreckverhältnis von 1 zu 57,5 erzielt wurde. Die Stärke der gereckten EVOH-Schicht lag bei etwa 1,2 µm.

Die so hergestellte Mehrschichtfolie wies eine Sauerstoffdurchlässigkeit auf, die deutlich unter den bisher bekannten Werten lag.

Bei einem weiteren Versuch wurde eine Mehrschichtfolie hergestellt, bei der zwei EVOH und zwei PP Lagen unter Zwischenschaltung jeweils einer Haftvermittlerschicht extrudiert wurden. Auch diese mit sieben Lagen ausgestattete Mehrschichtfolie wurde anschließend im Flächenverhältnis von 1 zu 57,5 simultan biaxial verstreckt, wobei noch bessere Barriereeigenschaften erzielt wurden.

Es ist auch denkbar, bei einer derartigen Mehrschichtfolie zwischen die beiden inneren EVOH-Schichten eine weitere PP-Lage einzubringen. Darüber hinaus können fuhr die Mittellage und/oder eine oder beide der Außenlagen anstelle von Polypropylen auch PE oder PET eingesetzt werden, wobei die für diese Polymere erforderlichen Flächenreckverhältnisse eingehalten werden müssen.

## Patentansprüche

1. Mehrschichtfolie, mit wenigstens je einer äußeren Folienlage aus Polypropylen und wenigstens einer inneren Folienlage aus Ethylen-Vinylalkohol-Copolymerisat, **dadurch gekennzeichnet**, daß die Mehrschichtfolie simultan biaxial gereckt ist.

2. Mehrschichtfolie nach Anspruch 1, **dadurch gekennzeichnet**, daß das Reckverhältnis längs und quer etwa 7 bis 8 zu 1 beträgt.

3. Mehrschichtfolie nach Anspruch 2, **dadurch gekennzeichnet,** daß das Flächenreckverhältnis zwischen 1 zu 49 und 1 zu 64 liegt.

4. Mehrschichtfolie nach einem der vorhergehenden Ansprüche, **dadurch gekennzeichnet**, daß mehrere Folienlagen aus PP und/oder mehrere innere Lagen aus EVOH übereinanderliegend vorgesehen sind.
